# EUROPEAN PATENT SPECIFICATION

(11) **EP 3 089 055 B1**
(45) Date of publication and mention of the grant of the patent: **26.06.2019**
(21) Application number: 16158097.2
(22) Date of filing: 01.03.2016
(51) Int. Cl.: G06Q 10/00, G06Q 50/00

(54) **METHOD AND DEVICE FOR DISPLAYING INFORMATION FLOWS IN SOCIAL NETWORK, AND SERVER**
VERFAHREN UND VORRICHTUNG ZUR ANZEIGE VON INFORMATIONSFLÜSSEN IN SOZIALEN NETZWERKEN UND SERVER
PROCÉDÉ ET DISPOSITIF POUR AFFICHER DES FLUX D'INFORMATIONS DANS UN RÉSEAU SOCIAL ET SERVEUR

(30) Priority: 28.04.2015 CN 201510209620
(43) Date of publication of application: 02.11.2016
(73) Proprietor: Xiaomi Inc., Beijing 100085 (CN)
(72) Inventor: XU, Ruijun, 100085 Beijing (CN); WEN, Zhenwei, 100085 Beijing (CN); ZHANG, Bo, 100085 Beijing (CN)
(74) Representative: Hughes, Andrea Michelle

(56) References cited:
- EP-A1- 2 814 211
- EP-A2- 2 369 820
- CN-A- 103 020 152
- Anonymous: "OneTeam desktop: unique features highlight", ProcessOne Blog , 22 December 2010 (2010-12-22), page 10PP, XP002761604, Retrieved from the Internet: URL:https://blog.process-one.net/oneteam_d esktop_unique_features_highlight/ [retrieved on 2016-09-08]

## Description

### TECHNICAL FIELD

The present disclosure relates to the field of communication technology, and more particularly, to a method and a device for displaying information flows in a social network, and a server.

### BACKGROUND

With the development of Social Network Software (SNS), MicroBlog, WeChat, and the like are gradually becoming the people's favorite common communication tools. Taking MicroBlog for example, each user can post information, and browse information posted by other users. On a home page of the user, information posted by the user and users followed by the user is usually displayed. In related arts, when a user of a social network posts a lot of pieces of information within a certain period of time, a large part of a page will be occupied (known as "spam the flooding"), so that information posted by other users is not easy to see, which brings a poor user experience to the user browsing information.

EP 281421, EP 2369820 and CN 103020152 all discuss collating and managing the display of messages or information to improve user experience.

### SUMMARY

The invention is defined by independent claim 1 (method), independent claim 10 (apparatus) and independent claim 13 (computer program). Dependent claims define preferred embodiments.

For this, the present disclosure provides a method and a device for displaying information flows in a social network, and a server, in order to solve the problem in related arts that a user of a social network posts a lot of pieces of information within a set time period, which brings a poor user experience to other users browsing information.

According to a first aspect of embodiments of the present disclosure, there is provided a method for displaying information flows in a social network, including:
in information flows posted by a user of the social network, judging whether pieces of target information greater than or equal to a set number posted within a set time period exist;
if it is judged that the pieces of target information exist, according to a preset rule, aggregating the pieces of target information into a target information group; and
displaying the target information group.

Optionally, the according to a preset rule, aggregating the pieces of target information into a target information group includes:
judging whether the pieces of target information are posted by a same user;
if it is judged that the pieces of target information are posted by the same user, judging whether there is intervening information posted by other users between post times of respective pieces of target information; and
based on a result of judging whether there is the intervening information, aggregating the pieces of target information into a target information group.

Optionally, aggregating the pieces of target information into a target information group based on a result of judging whether there is the intervening information, includes:
if it is judged that there is no intervening information posted by other users, aggregating the pieces of target information into a target information group; and
if it is judged that there is the intervening information posted by other users, aggregating pieces of target information greater than or equal to two pieces separated by the intervening information into a target information group.

Optionally, the aggregating the pieces of target information into a target information group according to a preset rule, includes:
judging whether the pieces of target information are posted by the same user;
if it is judged that the pieces of target information are not posted by the same user, determining a post manner of the pieces of target information; and
when the pieces of target information are posted by at least two different users in alternate manner, aggregating the pieces of target information into a target information group respectively according to the different users to which the pieces of target information belong.

Optionally, the aggregating the pieces of target information into a target information group according to a preset rule, includes:
extracting at least one keyword from each piece of target information;
based on the extracted keyword, determining attribute class of the corresponding piece of target information; and
based on the different attribute class, aggregating two or more pieces of target information belonging to the same attribute class into a target information group.

Optionally, the displaying the target information group includes:
extracting key information from the latest piece of target information newly posted in the target information group;
using the key information in the latest piece of target information as display information, and folding or hiding other pieces of target information except the latest piece of target information; using post time of the latest piece of target information as post time of the target information group; and
displaying the target information group in order of post time.

Optionally, the key information includes:
an abstract, or a keyword of the latest piece of target information, or attribute class to which the latest piece of target information belongs.

The displaying the target information group includes:
using the latest piece of target information newly posted in the target information group as display information, and folding or hiding other pieces of target information except the latest piece of target information;
using post time of the latest piece of target information as post time of the target information group; and
displaying the target information group in order of post time.

Optionally, the method further includes:
using the number of the pieces of target information contained in the target information group as display information.

Optionally, after displaying the target information group, the method further includes:
displaying information not aggregated in the information flows.

According to a second aspect of embodiments of the present disclosure, there is provided a device for displaying information flows in a social network, the device includes:
a target information judging module configured to, in information flows posted by a user of the social network, judge whether pieces of target information greater than or equal to a set number posted within a set time period exist;
an aggregation module configured to, if it is judged that the pieces of target information exist, according to a preset rule, aggregate the pieces of target information into a target information group; and
a display module configured to display the target information group.

Optionally, the aggregation module includes:
a first judging submodule configured to judge whether the pieces of target information are posted by a same user;
a second judging submodule configured to, if it is judged that the pieces of target information are posted by the same user, judge whether there is intervening information posted by other users between post times of respective pieces of target information; and
an aggregation submodule configured to, based on a result of judging whether there is the intervening information, aggregate the pieces of target information into a target information group.

Optionally, the aggregation submodule includes:
a first aggregation submodule configured to, if it is judged that there is no intervening information
posted by other users, aggregate the pieces of target information into a target information group; and
a second aggregation submodule configured to, if it is judged that there is the intervening information posted by other users, aggregate pieces of target information greater than or equal to two pieces separated by the intervening information into a target information group.

Optionally, the aggregation module includes:
a first judging submodule configured to judge whether the pieces of target information are posted by the same user;
a post manner determination submodule configured to, if it is judged that the pieces of target information are not posted by the same user, determine a post manner of the pieces of target information; and
an aggregation submodule configured to, when the pieces of target information are posted by at least two different users in alternate manner, aggregate the pieces of target information into a target information group respectively according to the different users to which the pieces of target information belong.

Optionally, the aggregation module includes:
a keyword extraction submodule configured to extract at least one keyword from each piece of target information;
an attribute class determination submodule configured to, based on the extracted keyword, determine attribute class of the corresponding piece of target information; and
an aggregation submodule configured to, based on the different attribute class, aggregate two or more pieces of target information belonging to the same attribute class into a target information group.

Optionally, the display module includes:
a key information extraction submodule configured to extract key information from the latest piece of target information newly posted in the target information group;
an information processing submodule configured to use the key information in the latest piece of target information as display information and fold or hide other pieces of target information except the latest piece of target information;
a post time determination submodule configured to use post time of the latest piece of target information as post time of the target information group; and
a first display submodule configured to display the target information group in order of post time. Optionally, the key information extracted by the key information extraction submodule comprises an abstract, or a keyword of the latest piece of target information, or attribute class to which the latest piece of target information belongs.

The display module includes:
an information processing submodule configured to use the latest piece of target information newly posted in the target information group as display information, and fold or hide other pieces of target information except the latest piece of target information;
a post time determination submodule configured to use post time of the latest piece of target information as post time of the target information group; and
a first display submodule configured to display the target information group in order of post time.

Optionally, the device further includes:
a display information determination module configured to use the number of the pieces of target information contained in the target information group as display information.

Optionally, the display module further includes:
a second display submodule configured to display information not aggregated in the information flows.

According to a third aspect of embodiments of the present disclosure, there is provided a device for displaying information flows in a social network, including: a processor; and a memory for storing instructions executable by the processor; wherein the processor is configured to:
in information flows posted by a user of the social network, judge whether pieces of target information greater than or equal to a set number posted within a set time period exist;
if it is judged that the pieces of target information exist, according to a preset rule, aggregate the pieces of target information into a target information group; and
display the target information group.

According to a fourth aspect of embodiments of the present disclosure, there is provided a computer program, which when executing on a processor of a device, performs a method according to any one of the above methods according to a first aspect of embodiments of the present disclosure.

The technical solutions provided by the embodiments of the present disclosure may include the following advantageous effects:
In the present disclosure, for the acquired information flows in the social network, the server may judge whether pieces of target information greater than or equal to a set number posted within a set time period exist, and if it is judged that the pieces of target information exist, according to a preset rule, aggregate the pieces of target information into a target information group; and then display the target information group. By aggregating the pieces of target information into the target information group, the problem that a large part of a page is occupied while a large number of information is posted by the user within a short time, which causes interference to other users is solved; furthermore, since layout of a printed page is more clear and beautiful, user's reading experience is improved and enhanced.

In the present disclosure, the server may judge whether the pieces of target information are posted by a same user, and whether there is intervening information posted by other users within post time of the pieces of target information, and based on different judging results, aggregate the pieces of target information. If there is no intervening information posted by other users within post time of the pieces of target information, the pieces of target information are aggregated into a target information group; and if there is the intervening information, pieces of target information greater than or equal to two pieces separated by the intervening information are aggregated. Thus avoiding problems that when the intervening information exists, if the pieces of target information separated by the intervening information are aggregated together, the post time of the target information group is not easy to determine, and an arrangement order between the target information group and the intervening information is not easy to determine.

In the present disclosure, the server may also aggregate the pieces of target information posted by different users respectively, so as to display from which user the target information group is.

In the present disclosure, the server may also extract a keyword from the corresponding piece of target information, and based on the keyword, determine attribute class of the each piece of target information, then based on the different attribute class, aggregate the pieces of target information respectively. Since the pieces of target information are aggregated according to the attribute class, it is able to facilitate the users to view information within the field which is of interest to them, and the user is not affected by other information which they are not interested in.

In the present disclosure, the server also improves display manners of the target information group and the information not aggregated, to only display the key information in newly posted target information, and fold or hide other information, which can effectively save page space occupied by the target information group, and will not cause interference to other users due to "spam the flooding". Furthermore, since only information (such as the abstract, the keyword, and the like) is displayed, it makes layout of the printed page clear and beautiful, and is convenient for the user to select whether the target information group needs to be unfolded to view.

In the present disclosure, when there is not too much content in information newly posted in the target information group, the server may display all contents of the latest piece of target information, and fold or hide other pieces of target information, so that other users are able to see all contents of the latest piece of target information.

It is to be understood that both the foregoing general description and the following detailed description are exemplary and explanatory only and are not restrictive of the invention.

### BRIEF DESCRIPTION OF THE DRAWINGS

Fig. 1 is a flowchart illustrating a method for displaying information flows in a social network, according to an exemplary embodiment of the present disclosure.
Fig. 2A is a schematic diagram illustrating an application scenario for displaying information flows in a social network, according to an exemplary embodiment of the present disclosure.
Fig. 2B is a schematic diagram illustrating another application scenario for displaying information flows in a social network, according to an exemplary embodiment of the present disclosure.
Fig. 3 is a block diagram illustrating a device for displaying information flows in a social network, according to an exemplary embodiment of the present disclosure.
Fig. 4 is a block diagram illustrating another device for displaying information flows in a social network, according to an exemplary embodiment of the present disclosure.
Fig. 5 is a block diagram illustrating a further device for displaying information flows in a social network, according to an exemplary embodiment of the present disclosure.
Fig. 6 is a block diagram illustrating a further device for displaying information flows in a social network, according to an exemplary embodiment of the present disclosure.
Fig. 7 is a block diagram illustrating a further device for displaying information flows in a social network, according to an exemplary embodiment of the present disclosure.
Fig. 8 is a block diagram illustrating a further device for displaying information flows in a social network, according to an exemplary embodiment of the present disclosure.
Fig. 9 is a block diagram illustrating a further device for displaying information flows in a social network, according to an exemplary embodiment of the present disclosure.
Fig. 10 is a block diagram illustrating a further device for displaying information flows in a social network, according to an exemplary embodiment of the present disclosure.
Fig. 11 is a block diagram illustrating a further device for displaying information flows in a social network, according to an exemplary embodiment of the present disclosure.
Fig. 12 is a structurally schematic diagram illustrating a device for displaying information flows in a social network, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

The terminologies used herein are only for describing particular embodiments but not for limiting the present disclosure. The singular form words "a", "the", and "said" used in the present disclosure and append claims are intended to include plural form, unless otherwise clearly stated. Also, it shall be appreciated that the terminology "and/or" used herein refers to any or all combinations of one or more listed related items.

It shall be appreciated that although the present disclosure uses terminologies "first", "second", and "third" and the like to describe various information, the information shall not be limited by these terminologies. Using these terminologies is only for distinguishing information of the same type. For example, without departing from the scope of the present disclosure, the first information may be referred to as the second information, and similarly, the second information may be referred to as the first information. Depending on the context, the terminology "if' used herein may be interpreted as "when" or "in response to determining that...".

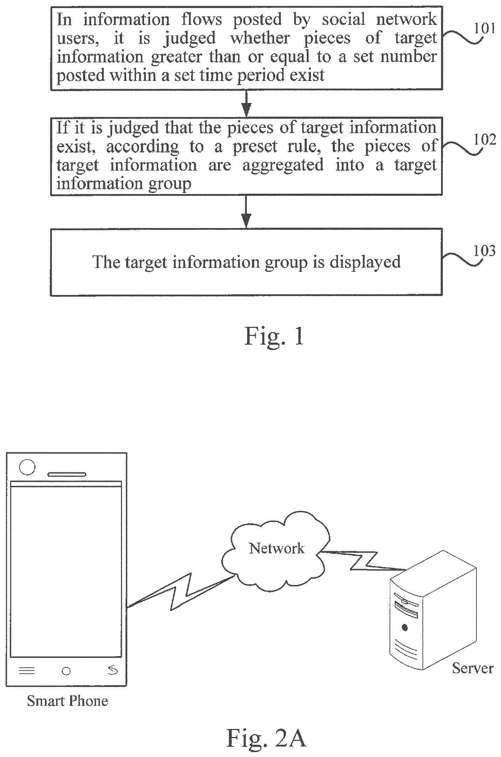

As shown in Fig. 1, Fig. 1 is a flowchart illustrating a method for displaying information flows in a social network, according to an exemplary embodiment. The method may be used to a server, and the method includes the following steps.

Step 101. In information flows posted by a user of the social network, it is judged whether there exist pieces of target information greater than or equal to a set number posted within a set time period.

In the present disclosure, if a Social Network Software, such as MicroBlog, is logged in on a webpage, the server is a web server; and if an Application (APP) of the Social Network Software is logged in via a terminal, the server is an APP server. In the present disclosure, the terminal may be any smart terminal with Internet connecting capacity, such as a mobile phone, a tablet, a Personal Digital Assistant (PDA), and the like. The method may also be applied in a client.

In the present disclosure, the server may acquire information posted by a user of a social network in advance. The users of the social network herein include a main user logging in his/her account of the social network and users followed by the main user (hereinafter, referred to as "followed users"), or the main user's friends. A manner for acquiring information may be that the server detects a refresh instruction, and acquires information posted by each user of the social network based on the refresh instruction. This manner corresponds to updating the information flows by the users' manually refreshing, for example, drop-down of WeChat to refresh, and manually refresh function setting of MicroBlog. The manner for acquiring information may also be that the server automatically acquires information (such as Qzone, and the like) posted by the social network user at every set time. With the above manners, the server may obtain original information flows, which include a user account (a username) for posting information, time of posting information, contents of posted information, and the like.

In conditions for judging the pieces of target information in this step of the present disclosure, the set time period can be set to, for example, 1-3 hours, the set number of the target information can be set to, for example, 6 pieces. The set number of the target information can be set based on factors, for instance, the number of followed users, the habit of reading social network information by the main user, and the like. For example, if there are many users followed by the main user, the total number of the piece of information in the information flows should be big; in this case, if a followed user continuously posts four or five pieces of information, it may cause interference to the main user, thereby the set number may be set relatively small, such as 4 pieces. Whereas, in the case that there is small number of followed users, the set number of the target information may be set more, such as 8-10 pieces. For another example, if the main user is busy, his/her time for reading the social network information every day is limited, and the main user may probably look at the social network information roughly, in this case, the set number may also be set fewer.

Step 102. If it is judged that the pieces of target information exist, according to a preset rule, the pieces of target information are aggregated into a target information group.

In embodiments of the present disclosure, the pieces of target information may be aggregated based on whether the pieces of target information are posted by the same user, and may also be aggregated based on whether the keyword of the pieces of target information, and so on. These cases are discussed separately in embodiments of the present disclosure, and how to aggregate the pieces of target information is illustrated in combination with one scenario. Suppose the main user has a plurality of followed users a, b, c, and the like. Suppose the set time period is 1 hour, the set number is 4 pieces, and the followed user a posts six pieces of information: information a1, a2, a3, a4, a5 and a6. The pieces of target information al-a5 are posted within 1 hour, thereby the pieces of target information a1, a2, a3, a4 and a5 satisfy the judging condition in step 101, and are "target information".

Firstly, it is discussed the case that respective pieces of target information are posted by the same user. When there is no intervening information posted by other users between post times of respective pieces of target information, the pieces of target information are aggregated into a target information group.

This case means that, within the time the followed user posts the pieces of target information, the pieces of target information are not separated by information posted by other followed users; here, information posted by other followed users is referred to as "intervening information", that is, in the information flows, post times of several pieces of target information are adjacent and continuous, thereby the several pieces of target information may be aggregated into a target information group. In combination with the scenario of the present disclosure, i.e., within the time the followed user a posts the pieces of target information a1, a2, a3, a4 and a5, there is no information posted by other followed users, information posted by other followed users is before target information a1 with the earliest post time or after target information a5 with the latest post time. Then, the pieces of target information al-a5 maybe aggregated into a target information group.

Then, it is discussed the case that respective pieces of target information are not posted by the same user, or there is information posted by other users between post times of respective pieces of target information.

A first case: when there is the intervening information posted by other users between post times of respective pieces of target information, pieces of target information greater than or equal to two pieces separated by the intervening information are aggregated into a target information group.

If there is the intervening information posted by other followed users within a post time period of several pieces of target information, the several pieces of target information may be split by the intervening information (i.e., by the post time of the intervening information), and then the split adjacent pieces of target information greater than or equal to two pieces are aggregated.

In combination with the scenario of the present disclosure, if the followed user b posts information b1 between post times of the pieces of information a1 and a2 posted by the followed user a, at this time, the information flows in order of time are a1, b1, a2, a3, a4 and a5. Since the followed user a just posts a piece of target information a1 before the information b1 is posted, aggregation cannot be made, and thus any processing is not made to the target information a1. However, since the followed user a posts four pieces of target information a2-a5 after the information b1 is posted, the pieces of target information a2-a5 may be aggregated into a target information group.

If the followed user b posts information b1 between post times of the pieces of information a2 and a3 posted by the followed user a, at this time, the information flows in order of time are a1, a2, b1, a3, a4 and a5. Since there are two pieces of target information before the information b1 is posted, and there are three pieces of target information after the information b1 is posted, both of which are more than two pieces, the pieces of target information al-a2 and a3-a5 are aggregated respectively to obtain two target information groups.

A second case: when the pieces of target information are posted by two or more users, and at least two groups of target information from different users are alternately posted, the pieces of target information are aggregated into a target information group respectively according to the different users to which the pieces of target information belong.

In combination with the scenario of the present disclosure, if the followed user b posts the information b1 within the post time between the pieces of information a1 and a2, posts information b2 within the time between the pieces of information a2 and a3, and posts information b3 within the time between the pieces of information a3 and a4, at this time, the information flows according to the time order are a1, b1, a2, b2, a3, b3, a4 and a5. It can be seen from above, the pieces of information b1-b3 posted by the followed user b are the target information, and at least two groups of information from the followed user a and the followed user b are alternately posted, then, in this case, according to the different posters, the pieces of target information a1-a5 and the pieces of target information bl-b3 are aggregated respectively.

If the user b does not post the information b3 within the time between the pieces of target information a3 and a4 are posted, and the user c posts information c1 within the time between the pieces of target information a4 and a5 are posted, at this time, the information flows according to the time order are a1, b1, a2, b2, a3, a4, c1 and a5. Then, the pieces of target information a1, a2, a3 and a4 are aggregated into a target information group, the pieces of target information b1 and b2 are aggregated into a target information group, and aggregation processing is not made to the information a5 separated by the information c1.

Finally, it is discussed the case that the pieces of target information are aggregated based on a keyword and attribute classification of each piece of target information.

In this case, firstly, the keyword can be extracted from each piece of target information, the keyword may be one or more words with the highest frequency in the each piece of information; then, a preset attribute database is searched based on the extracted keyword, and attribute class of the each piece of target information is determined; finally, two or more pieces of target information belonging to the same attribute class in the pieces of target information are aggregated.

The pieces of target information may also be aggregated only based on the keyword. For example, most users forward "Under the Dome" of Jing CHAI within one day or a certain period of time, thereby the keyword or attribute class is the same, in this case, the pieces of target information may be aggregated.

Step 103. The target information group is displayed.

For the target information group, since two or more pieces of target information are included, in order to solve the problem that a large part of a page is occupied, the present disclosure will not display all information in the target information group, but make some improvements to the display manner.

The display manner in step 103 of the present disclosure may be that: key information (such as an abstract, or a keyword, or attribute class to which the latest piece of target information belongs) in the latest piece of target information newly posted in the target information group is extracted; the abstract or the keyword in the latest piece of target information is used as display information, and other pieces of target information except the latest piece of target information are folded or hidden; post time of the latest piece of target information is used as post time of the target information group; and the target information group is displayed, and information not aggregated is also displayed, the target information group and the information not aggregated are displayed according to a post time order.

The scenario applicable for this display manner includes: there exist users who like to post a large number of contents, for example, record his/her state of life in a day, or like to forward a large number of all kinds of posts. In this case, by only displaying the abstract or the keyword, other users may understand whether contents posted by the user needs to be viewed in detail. The scenario applicable for this display manner also includes: in most cases, the followed user only posts information in some specific fields, in this case, by only displaying the keyword or the attribute class of the target information group other users may understand information posted by the user clearly. For example, for a user, who sells products on MicroBlog or Wechat, a large number of pictures and texts of the products posted by the user may cause interference to the user's friends, who have no need to buy this kind of product, and the user may even be blocked, but at the same time, the user's friends, who shield the user, may miss useful items. Since the items posted by a seller are usually like products, such as jewelry, maternal and child, and the like, the keyword or the attribute class of the pieces of target information may be only displayed by aggregating, thereby the user's friends may not only understand the products posted by the user, but also not be disturbed by too many pictures and texts.

The display manner in step of the present disclosure may also be that: the latest piece of target information newly posted in the target information group is used as display information, and other pieces of target information except the latest piece of target information are folded or hidden; post time of the latest piece of target information is used as post time of the target information group; and the target information group and the information not aggregated are displayed in order of post time.

The scenario applicable for this display manner includes: for example, there exist users who like to post a large number of all kinds of contents, and like to forward a large number of all kinds of posts. In this case, by only displaying the latest piece of target information, other users may understand the user's updates.

Whether the users log in their social network accounts via a webpage or a client or other ways, the information posted by the users correspondingly has a display area, a username of the user to which the information belongs may also be displayed in the display area, post time of the information may be a particular time point, and may also be approximate time (such as a day ago, 1 hour ago, and the like) posted by the information; and post source (such as an iPhone, which indicates that the information is posted by the user via the iPhone, the information is posted by the user via a 360 browser, and the like) of the information may also be displayed.

In above display manners, partial information in the target information group is used as display information, and other information is folded or hidden. Pieces of information included in the target information group may also be used as display content. The above display manners may also be combined. And, functional options, used to prompt "unfold the display", and the like, may be set in the display area of the target information group. When the user clicks an icon of "unfold the display", all pieces of folded or hidden target information will be displayed. In addition, for each piece of information, the functional options, such as "forward", "comment", "edit", "like", "collect" and "reply", and the like, may be set in the display area for the user to operate.

Fig. 2A is a schematic diagram illustrating an application scenario for displaying information flows in a social network, according to an exemplary embodiment of the present disclosure. In the application scenario shown in Fig. 2A, including a terminal and a server. The terminal is particularly a smart phone, taking WeChat as an example of a piece of Social Network Software, an APP client of WeChat is installed in the smart phone, and the server is a WeChat server.

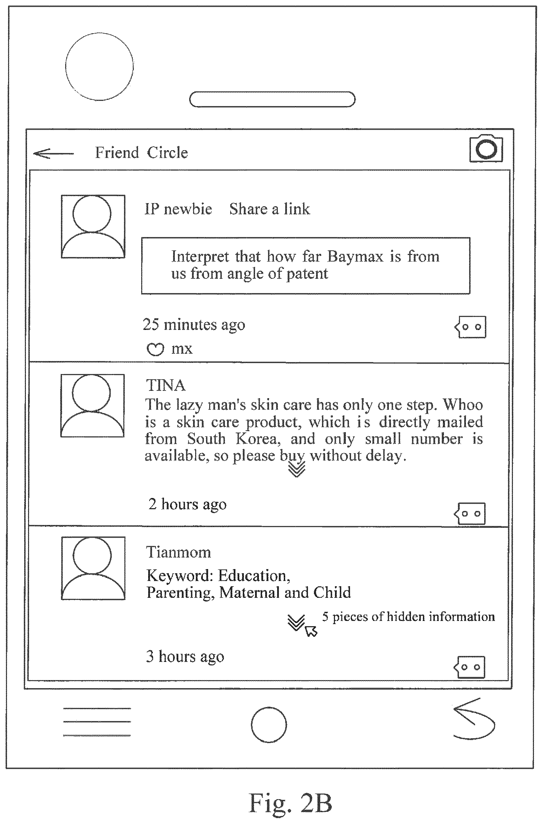

Fig. 2B is a schematic diagram illustrating an application scenario for displaying information flows in a social network, according to an exemplary embodiment of the present disclosure. Referring to Fig. 2B, the APP client of WeChat detects that a user logs in, and detects that information flows posted by the user and users followed by the user are acquired from the WeChat server after a drop-down operation is performed to refresh, specifically, the information flows are information flows posted by the user since the last time of acquiring the information flows. For the acquired information flows, the APP client judges whether pieces of information (i.e., target information) greater than or equal to a set number posted within a set time period exist; here, suppose the set time period is 2 hours, and the set number is 5. The APP client judges that 6 pieces of information (i.e., target information) posted within 1.5 hours exist, and all the information is from a user TINA, thereby the APP client aggregates the 6 pieces of target information into a target information group, and uses newly posted information as display information of the target information group. The APP client also judges that 5 pieces of information posted within 2 hours exist, and all the information is from a user Tianmom. Then, the APP client extracts keywords of the pieces of target information, and finds out that most of the keywords are the same, thereby the APP client uses keywords "education", "parenting", and "maternal and child" in a piece of newly posted target information display information of the target information group, and folds and hides other pieces of information. And, the APP client may also be set that a mouse is moved to an unfolding icon to be able to display how many pieces of information are hidden, as shown in Fig. 2B, "5 pieces of information are hidden" is displayed; then, post time of the target information newly posted in the target information group is used as post time of the target information group, and the target information group and information not processed (i.e., information posted by a user IP newbie) in the information flows are displayed.

In the application scenarios shown in Fig. 2A and Fig. 2B, specific processes for displaying information flows in a social network may refer to descriptions of Fig. 1 and therefore repeated descriptions are omitted here.

Corresponding to the above embodiments of the method for displaying information flows in a social network, the present disclosure further provides embodiments of a device for displaying information flows in a social network, and a server in which the device is applied.

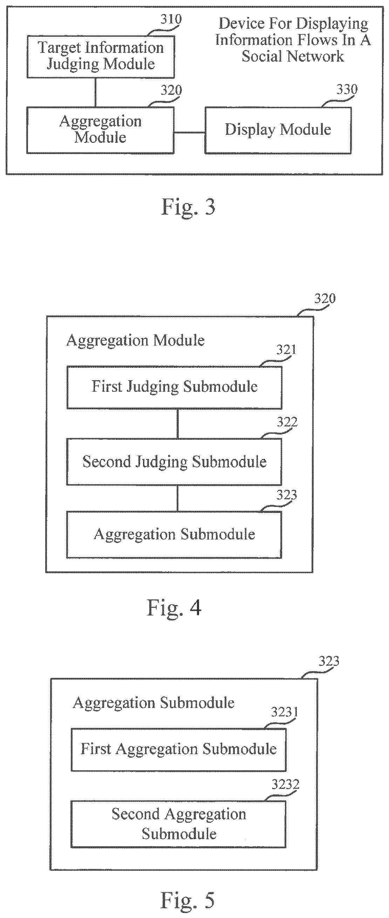

As shown in Fig. 3, Fig. 3 is a block diagram illustrating a device for displaying information flows in a social network, according to an exemplary embodiment of the present disclosure. The device includes a target information judging module 310, an aggregation module 320 and a display module 330.

The target information judging module 310 is configured to, in information flows posted by a user of the social network, judge whether pieces of target information greater than or equal to a set number posted within a set time period exist.

The aggregation module 320 is configured to, when the judging module 310 judges the pieces of target information exist, according to a preset rule, aggregate the pieces of target information into a target information group.

The display module 330 is configured to display the target information group aggregated by the aggregation module 320.

In the above embodiment, for the acquired social network information flows, the server or the client judges whether pieces of target information greater than or equal to a set number posted within a set time period exist; and when it is judged that the pieces of target information exist, according to a preset rule, aggregates the pieces of target information into a target information group; and then displays the target information group. By aggregating the pieces of target information into the target information group, the present disclosure solves the problem that a large part of a page is occupied while a large number of information is posted by the user within a short time, which causes interference to other users; and improves and optimizes user experience.

As shown in Fig. 4, Fig. 4 is a block diagram illustrating another device for displaying information flows in a social network, according to an exemplary embodiment of the present disclosure. The embodiment is based on the embodiment shown in Fig. 3. The aggregation module 320 may include a first judging submodule 321, a second judging submodule 322 and an aggregation submodule 323.

The first judging submodule 321 is configured to judge whether the pieces of target information are posted by a same user.

The second judging submodule 322 is configured to, if it is judged that the pieces of target information are posted by the same user, judge whether there is intervening information posted by other users between post times of respective pieces of target information.

The aggregation submodule 323 is configured to, based on a result of judging whether there is the intervening information judged in the second judging submodule 322, aggregate the pieces of target information into a target information group.

In the above embodiment, the server or the client judges whether the pieces of target information are posted by the same user, and whether there is intervening information posted by other users between post times of respective pieces of target information, and the pieces of target information are aggregated based on the different judging results.

As shown in Fig. 5, Fig. 5 is a block diagram illustrating a further device for displaying information flows in a social network, according to an exemplary embodiment of the present disclosure. The embodiment is based on the embodiment shown in Fig. 4. The aggregation submodule 323 includes a first aggregation submodule 3231 and a second aggregation submodule 3232.

The first aggregation submodule 3231 is configured to, when the aggregation submodule 323 judges that there is no intervening information posted by other users, aggregate the pieces of target information into a target information group.

The second aggregation submodule 3232 is configured to, when the aggregation submodule 323 judges that is the intervening information posted by other users, aggregate pieces of target information greater than or equal to two pieces separated by the intervening information into a target information group.

In the above embodiment, when there is no intervening information posted by other users within post time of the pieces of target information, the pieces of target information are aggregated into a target information group; and when there is the intervening information, pieces of target information greater than or equal to two pieces separated by the intervening information are aggregated. Thus avoiding problems that when the intervening information exists, if the pieces of target information separated by the intervening information are aggregated together, the post time of the target information group is not easy to determine, and an arrangement order between the target information group and the intervening information is not easy to determine.

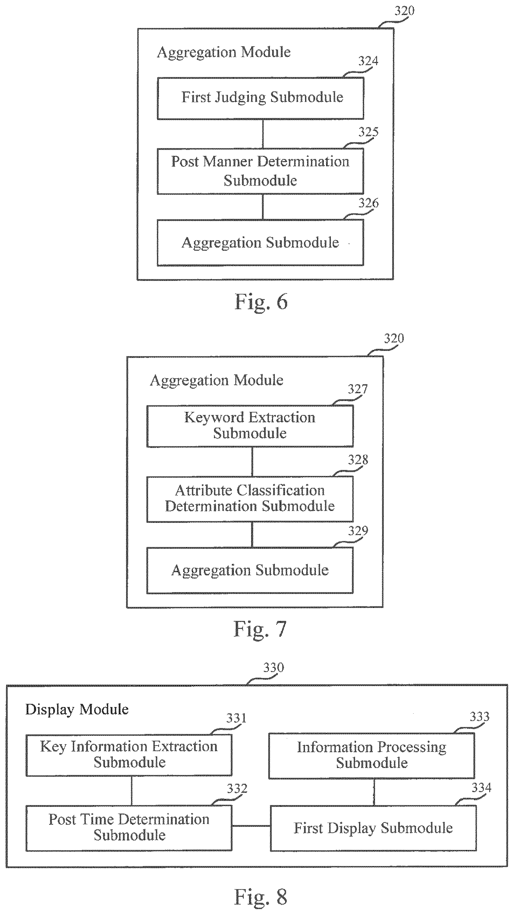

As shown in Fig. 6, Fig. 6 is a block diagram illustrating a further device for displaying information flows in a social network, according to an exemplary embodiment of the present disclosure. The embodiment is based on the embodiment shown in Fig. 3. The aggregation module 320 may include a first judging submodule 324, a post manner determination submodule 325 and an aggregation submodule 326.

The first judging submodule 324 is configured to judge whether the pieces of target information are posted by the same user.

The post manner determination submodule 325 is configured to, when the first judging submodule 324 judges that the pieces of target information are not posted by the same user, determine a post manner of the pieces of target information.

The aggregation submodule 326 is configured to, when the post manner determination submodule 325 determines that the pieces of target information are posted by at least two different users in alternate manner, aggregate the pieces of target information into a target information group respectively according to the different users to which the pieces of target information belong.

In the above embodiment, the server or the client aggregates the pieces of target information posted by different users respectively, so that the source of the target information group is clear.

As shown in Fig. 7, Fig. 7 is a block diagram illustrating a further device for displaying information flows in a social network, according to an exemplary embodiment of the present disclosure. The embodiment is based on the embodiment shown in Fig. 3. The aggregation module 320 may include a keyword extraction submodule 327, an attribute class determination submodule 328 and an aggregation submodule 329.

The keyword extraction submodule 327 is configured to extract at least one keyword from each piece of target information.

The attribute class determination submodule 328 is configured to, based on the extracted keyword, determine attribute class of the corresponding piece of target information.

The aggregation submodule 329 is configured to, based on the different attribute class, aggregate two or more pieces of target information belonging to the same attribute class into a target information group.

In the above embodiment, the server or the client extracts a keyword from the corresponding piece of target information, and based on the keyword, determines attribute class of the each piece of target information, then based on the different attribute class, aggregates the pieces of target information respectively. Since the pieces of target information are aggregated according to the attribute class, it is able to facilitate the users to view information within the field which is of interest to them, and the user is not affected by other information which they are not interested in. As shown in Fig. 8, Fig. 8 is a block diagram illustrating a further device for displaying information flows in a social network, according to an exemplary embodiment of the present disclosure. The embodiment is based on the embodiment shown in Fig. 3. The display module 330 may include a key information extraction submodule 331, an information processing submodule 332, a post time determination submodule 333 and a first display submodule 334.

The key information extraction submodule 331 is configured to extract key information from the latest piece of target information newly posted in the target information group.

The information processing submodule 332 is configured to use the key information in the latest piece of target information extracted by the key information extraction submodule 331 as display information, and fold or hide other pieces of target information except the latest piece of target information.

The post time determination submodule 333 is configured to use post time of the latest piece of target information as post time of the target information group.

The first display submodule 334 is configured to display the target information group in order of post time.

The key information extracted by the key information extraction submodule 331 includes an abstract, or a keyword of the latest piece of target information, or attribute class to which the latest piece of target information belongs.

In the above embodiment, the server or the client improves display manners of the target information group and the information not aggregated, to only display the key information in newly posted target information, and fold or hide other information, which can effectively save page space occupied by the target information group, and will not cause interference to other users due to "spam the flooding". Furthermore, since only information (such as the abstract, the keyword, and the like) is displayed, it makes layout of the printed page clear and beautiful, and is convenient for the user to select whether the target information group needs to be unfolded to view.

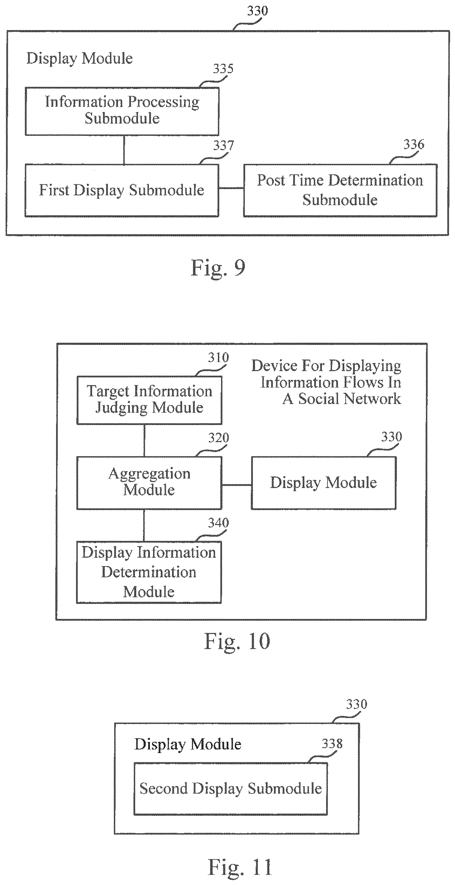

Shown in Fig. 9 is a block diagram illustrating a further device for displaying information flows in a social network, according to an exemplary embodiment of the present disclosure. The embodiment is based on the embodiment shown in Fig. 3. The display module 330 may include an information processing submodule 335, a post time determination submodule 336 and a first display submodule 337.

The information processing submodule 335 is configured to use the latest piece of target information newly posted in the target information group as display information, and fold or hide other pieces of target information except the latest piece of target information;

The post time determination submodule 336 is configured to use post time of the latest piece of target information as post time of the target information group; and

The first display submodule 337 is configured to display the target information group in order of post time determined by the post time determination submodule 336.

In the above embodiment, when there is not too much content in information newly posted in the target information group, the server may display all contents of the latest piece of target information, and fold or hide other pieces of target information, so that other users are able to see all contents of the latest piece of target information.

As shown in Fig. 10, Fig. 10 is a block diagram illustrating a further device for displaying information flows in a social network, according to an exemplary embodiment of the present disclosure. The embodiment is based on the embodiment shown in Fig. 7 or Fig. 8 or Fig. 9. The device may further include a display information determination module 340.

The display information determination module 340 is configured to use the number of the pieces of target information contained in the target information group as display information.

As shown in Fig. 11, Fig. 11 is a block diagram illustrating a further device for displaying information flows in a social network, according to an exemplary embodiment of the present disclosure. The embodiment is based on the embodiment shown in Fig. 3. The display module 330 further includes a second display submodule 338.

The second display submodule 338 is configured to display information not aggregated in the information flows.

In the above embodiment, the pieces of target information contained in the target information group may also be displayed, so that other users are able to decide whether it is necessary to be unfolded to view based on information of the pieces.

Corresponding to the above embodiments of the method for displaying information flows in a social network, the present disclosure further provides embodiments of a device.

With respect to the devices in the above embodiments, specific operations and functions of respective modules have been described in detail in the embodiments of the methods and therefore repeated descriptions are omitted here.

The embodiments of devices basically correspond to the embodiments of methods, and thus for related portions, the description about the embodiments of methods may be referred to. The above described embodiments of devices are only illustrative, and portions described as separated modules may be or may not be physically separated, and the portions shown as respective modules may be or may not be physical modules, i.e., the portions may be located at one place, or may be distributed over a plurality of network modules. A part or whole of the modules may be selected to realize the objects of the technical solutions of the present disclosure according to actual requirements. One of ordinary skill in this art may understand and practice the technical solutions of the present disclosure without creative work.

Correspondingly, the present disclosure further provides a server, the server includes a processor; and a memory for storing instructions executable by the processor; wherein the processor is configured to:
in information flows posted by a user of the social network, judge whether pieces of target information greater than or equal to a set number posted within a set time period exist;
if it is judged that the pieces of target information exist, according to a preset rule, aggregate the pieces of target information into a target information group; and
display the target information group.

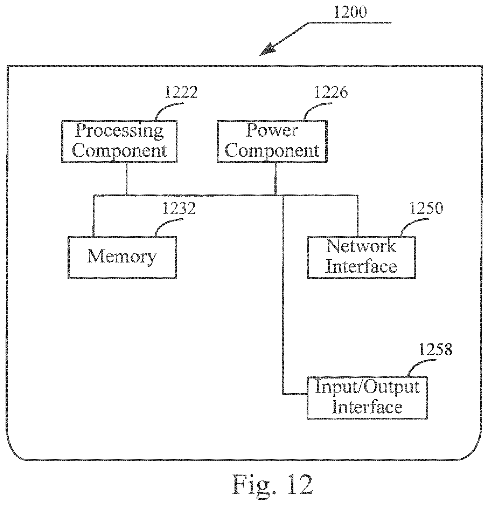

As shown in Fig. 12, Fig. 12 is a structurally schematic diagram illustrating another device 1200 for displaying information flows in a social network, according to an exemplary embodiment. For example, the device 1200 may be provided as a server, or a client. Referring to Fig. 1, the device 1200 may include a processing component 1222 that further includes one or more processors, and memory resources represented by a memory 1232 for storing instructions executable by the processing component 1222, such as application programs. The application programs stored in the memory 1232 may include one or more modules each corresponding to a set of instructions. Further, the processing component 1222 is configured to execute the instructions to perform the above method for displaying information flows in a social network.

The device 1200 may also include a power component 1226 configured to perform power management of the device 1200, wired or wireless network interface(s) 1250 configured to connect the device 1200 to a network, and an input/output (I/O) interface 1258. The device 1200 may operate based on an operating system stored in the memory 1232, such as Windows Server™, Mac OS X™, Unix™, Linux™, FreeBSD™, or the like.

## Claims

1. A method for displaying information flows in a social network to a main user, comprising:
in information flows posted by a followed user of the social network, followed by the main user, judging (101) whether pieces of target information from that followed user greater than or equal to a set number posted within a set time period exist;
if it is judged that the pieces of target information exist, according to a preset rule, aggregating (102) the pieces of target information into a target information group; and
displaying (103) the target information group, wherein the displaying the target information group comprises:
providing display information derived from the latest piece of target information newly posted in the target information group, and folding or hiding other pieces of target information except the latest piece of target information;
using post time of the latest piece of target information as post time of the target information group; and
displaying the target information group in order of post time;
wherein for a given set time, the set number is determined by parameters including the number of followed users followed by the main user and the amount of time the main user habitually spends on social media.

2. The method according to claim 1, wherein the according to a preset rule, aggregating the pieces of target information into a target information group comprises:
judging whether the pieces of target information are posted by a same followed user;
if it is judged that the pieces of target information are posted by the same followed user, judging whether there is intervening information posted by other users between post times of respective pieces of target information; and
based on a result of judging whether there is the intervening information, aggregating the pieces of target information into a target information group.

3. The method according to claim 2, wherein aggregating the pieces of target information into a target information group based on a result of judging whether there is the intervening information, comprises:
if it is judged that there is no intervening information posted by other users, aggregating the pieces of target information into a target information group; and
if it is judged that there is the intervening information posted by other users, aggregating pieces of target information greater than or equal to two pieces separated by the intervening information into a target information group.

4. The method according to claim 1, wherein aggregating the pieces of target information into a target information group according to a preset rule, comprises:
judging whether the pieces of target information are posted by the same followed user;
if it is judged that the pieces of target information are not posted by the followed user, determining if the pieces of target information are posted in a post/reply exchange; and
when the pieces of target information are posted by at least two different users in a post/reply exchange, aggregating the pieces of target information into a target information group respectively according to the different users to which the pieces of target information belong.

5. The method according to claim 1, wherein aggregating the pieces of target information into a target information group according to a preset rule, comprises:
extracting at least one keyword from each piece of target information;
based on the extracted keyword, determining attribute class of the corresponding piece of target information; and
based on the different attribute class, aggregating two or more pieces of target information belonging to the same attribute class into a target information group.

6. The method according to claim 1, wherein the displaying the target information group comprises:
extracting key information from the latest piece of target information newly posted in the target information group;
using the key information in the latest piece of target information as the display information, and folding or hiding other pieces of target information except the latest piece of target information;
using post time of the latest piece of target information as post time of the target information group; and
displaying the target information group in order of post time.

7. The method according to claim 6, wherein the key information comprises:
an abstract, or a keyword of the latest piece of target information, or attribute class to which the latest piece of target information belongs.

8. The method according to any preceding claim, wherein the method further comprises:
using the number of the pieces of target information contained in the target information group as display information.

9. The method according to claim 1, wherein after displaying the target information group, the method further comprises:
displaying information not aggregated in the information flows.

10. A device for displaying information flows in a social network to a main user, comprising:
a target information judging module (310) configured to, in information flows posted by a followed user of the social network, followed by the main user, judge whether pieces of target information from the followed user greater than or equal to a set number posted within a set time period exist;
an aggregation module (320) configured to, if it is judged that the pieces of target information exist, according to a preset rule, aggregate the pieces of target information into a target information group; and
a display module (330) configured to display the target information group, wherein the displaying the target information group comprises:
using the latest piece of target information newly posted in the target information group as display information, and folding or hiding other pieces of target information except the latest piece of target information;
using post time of the latest piece of target information as post time of the target information group; and
displaying the target information group in order of post time;
wherein for a given set time, the set number is determined by parameters including the number of followed users followed by the main user and the amount of time the main user habitually spends on social media.

11. The device according to claim 10, wherein the aggregation module (320) comprises:
a first judging submodule (321) configured to judge whether the pieces of target information are posted by a same followed user;
a second judging submodule (322) configured to, if it is judged that the pieces of target information are posted by the same followed user, judge whether there is intervening information posted by other users between post times of respective pieces of target information; and
an aggregation submodule (323) configured to, based on a result of judging whether there is the intervening information, aggregate the pieces of target information into a target information group.

12. The device according to claim 11, wherein the aggregation submodule (323) comprises:
a first aggregation submodule (3231) configured to, if it is judged that there is no intervening information posted by other users, aggregate the pieces of target information into a target information group; and
a second aggregation submodule (3232) configured to, if it is judged that there is the intervening information posted by other users, aggregate pieces of target information greater than or equal to two pieces separated by the interval information into a target information group.

13. A computer program, which when executing on a processor of a device, performs a method according to any one of claims 1-9.

## Patentansprüche

1. Verfahren zum Anzeigen von Informationsflüssen in einem sozialen Netzwerk an einen Hauptnutzer, umfassend:
Bestimmen (101) in durch einen Nutzer des sozialen Netzwerks, dem der Hauptnutzer folgt, geposteten Informationsflüssen, ob Zielinformationen von diesem Nutzer, dem gefolgt wird, vorliegen, die größer oder gleich einer innerhalb eines festgelegten Zeitraums geposteten festgelegten Zahl sind;
wenn bestimmt wird, dass die Zielinformationen vorliegen, Sammeln (102) der Zielinformationen in einer Zielinformationengruppe gemäß einer vorab festgelegten Regel; und
Anzeigen (103) der Zielinformationengruppe, wobei das Anzeigen der Zielinformationengruppe Folgendes umfasst:
Bereitstellen von Anzeigeinformationen, die von der letzten Zielinformation stammen, die in der Zielinformationengruppe neu gepostet wurden, und Falten oder Verbergen anderer Zielinformationen mit Ausnahme der letzten Zielinformation;
Verwenden der Postzeit der letzten Zielinformation als Postzeit der Zielinformationengruppe; und
Anzeigen der Zielinformationengruppe in der Reihenfolge der Postzeit;
wobei für eine gegebene festgelegte Zeit die festgelegte Zahl durch Parameter einschließlich der Zahl der Nutzer, denen der Hauptnutzer folgt, und der Menge an Zeit, die der Hauptnutzer gewöhnlich in den sozialen Medien verbringt, bestimmt wird.

2. Verfahren nach Anspruch 1, wobei das Sammeln der Zielinformationen in einer Zielinformationengruppe gemäß einer vorab festgelegten Regel Folgendes umfasst:
Bestimmen, ob die Zielinformationen von einem selben Nutzer, dem gefolgt wird, gepostet werden;
wenn bestimmt wird, dass die Zielinformationen von demselben Nutzer, dem gefolgt wird, gepostet werden, Bestimmen, ob es von anderen Nutzern zwischen den Postzeiten entsprechender Zielinformationen gepostete Zwischeninformationen gibt; und
Sammeln der Zielinformationen in einer Zielinformationengruppe basierend auf einem Ergebnis des Bestimmens, ob es Zwischeninformationen gibt.

3. Verfahren nach Anspruch 2, wobei das Sammeln der Zielinformationen in einer Zielinformationengruppe basierend auf einem Ergebnis des Bestimmens, ob es Zwischeninformationen gibt, Folgendes umfasst:
wenn bestimmt wird, dass es keine von anderen Nutzern gepostete Zwischeninformationen gibt, Sammeln der Zielinformationen in einer Zielinformationengruppe; und
wenn bestimmt wird, dass es die von anderen Nutzern geposteten Zwischeninformationen gibt, Sammeln von Zielinformationen, die größer als oder gleich zwei durch die Zwischeninformationen getrennte Informationen sind, in einer Zielinformationengruppe.

4. Verfahren nach Anspruch 1, wobei das Sammeln der Zielinformationen in einer Zielinformationengruppe gemäß einer vorab festgelegten Regel Folgendes umfasst:
Bestimmen, ob die Zielinformationen von demselben Nutzer, dem gefolgt wird, gepostet werden;
wenn bestimmt wird, dass die Zielinformationen nicht von demselben Nutzer, dem gefolgt wird, gepostet werden, Ermitteln, ob die Zielinformationen in einem Post/Antwort-Austausch gepostet werden; und
wenn die Zielinformationen von zumindest zwei verschiedenen Nutzern in einem Post/Antwort-Austausch gepostet werden, Sammeln der Zielinformationen jeweils in einer Zielinformationengruppe gemäß den verschiedenen Nutzern, zu denen die Zielinformationen gehören.

5. Verfahren nach Anspruch 1, wobei das Sammeln der Zielinformationen in einer Zielinformationengruppe gemäß einer vorab festgelegten Regel Folgendes umfasst:
Extrahieren von zumindest einem Schlüsselwort aus jeder Zielinformation;
Ermitteln der Attributkategorie der entsprechenden Zielinformation basierend auf dem extrahierten Schlüsselwort; und
Sammeln von zwei oder mehr Zielinformationen, die in dieselbe Attributkategorie gehören, in einer Zielinformationengruppe.

6. Verfahren nach Anspruch 1, wobei das Anzeigen der Zielinformationengruppe Folgendes umfasst:
Extrahieren von Schlüsselinformationen aus der letzten Zielinformation, die in der Zielinformationengruppe neu gepostet wurde;
Verwenden der Schlüsselinformationen in der letzten Zielinformation als Anzeigeinformationen und Falten oder Verbergen anderer Zielinformationen mit Ausnahme der letzten Zielinformation;
Verwenden der Postzeit der letzten Zielinformation als Postzeit der Zielinformationengruppe; und
Anzeigen der Zielinformationengruppe in der Reihenfolge der Postzeit.

7. Verfahren nach Anspruch 6, wobei die Schlüsselinformationen Folgendes umfassen:
eine Zusammenfassung oder ein Schlüsselwort der letzten Zielinformation oder der Attributkategorie, in die die letzte Zielinformation gehört.

8. Verfahren nach einem der vorstehenden Ansprüche, wobei das Verfahren weiter Folgendes umfasst:
Verwenden der Zahl der in der Zielinformationengruppe enthaltenen Zielinformationen als Anzeigeinformationen.

9. Verfahren nach Anspruch 1, wobei das Verfahren nach dem Anzeigen der Zielinformationengruppe weiter Folgendes umfasst:
Anzeigen von nicht in den Informationsflüssen gesammelten Informationen.

10. Vorrichtung zum Anzeigen von Informationsflüssen in einem sozialen Netzwerk an einen Hauptnutzer, umfassend:
ein Zielinformationenbestimmungsmodul (310), das dazu ausgelegt ist, in durch einen Nutzer des sozialen Netzwerks, dem der Hauptnutzer folgt, geposteten Informationsflüssen zu bestimmen, ob Zielinformationen von diesem Nutzer, dem gefolgt wird, vorliegen, die größer oder gleich einer innerhalb eines festgelegten Zeitraums geposteten festgelegten Zahl sind;
ein Sammelmodul (320), das dazu ausgelegt ist, wenn bestimmt wird, dass die Zielinformationen vorliegen, gemäß einer vorab festgelegten Regel die Zielinformationen in einer Zielinformationengruppe zu sammeln; und
ein Anzeigemodul (330), das dazu ausgelegt ist, die Zielinformationengruppe anzuzeigen, wobei das Anzeigen der Zielinformationengruppe Folgendes umfasst:
Verwenden der letzten Zielinformation, die in der Zielinformationengruppe neu gepostet wurde, als Anzeigeinformationen und Falten oder Verbergen anderer Zielinformationen mit Ausnahme der letzten Zielinformation;
Verwenden der Postzeit der letzten Zielinformation als Postzeit der Zielinformationengruppe; und
Anzeigen der Zielinformationengruppe in der Reihenfolge der Postzeit;
wobei für eine gegebene festgelegte Zeit die festgelegte Zahl durch Parameter einschließlich der Zahl der Nutzer, denen der Hauptnutzer folgt, und der Menge an Zeit, die der Hauptnutzer gewöhnlich in den sozialen Medien verbringt, ermittelt wird.

11. Vorrichtung nach Anspruch 10, wobei das Sammelmodul (320) Folgendes umfasst:
ein erstes Bestimmungsuntermodul (321), das dazu ausgelegt ist, zu bestimmen, ob die Zielinformationen von einem selben Nutzer, dem gefolgt wird, gepostet werden;
ein zweites Bestimmungsuntermodul (322), das dazu ausgelegt ist, wenn bestimmt wird, dass die Zielinformationen von einem selben Nutzer, dem gefolgt wird, gepostet werden, zu bestimmen, ob es von anderen Nutzern zwischen den Postzeiten entsprechender Zielinformationen gepostete Zwischeninformationen gibt; und
ein Sammeluntermodul (323), das dazu ausgelegt ist, basierend auf einem Ergebnis des Bestimmens, ob es Zwischeninformationen gibt, die Zielinformationen in einer Zielinformationengruppe zu sammeln.

12. Vorrichtung nach Anspruch 11, wobei das Sammeluntermodul (323) Folgendes umfasst:
ein erstes Sammeluntermodul (3231), das dazu ausgelegt ist, wenn bestimmt wird, dass es keine von anderen Nutzern gepostete Zwischeninformationen gibt, die Zielinformationen in einer Zielinformationengruppe zu sammeln; und
ein zweites Sammeluntermodul (3232), das dazu ausgelegt ist, wenn bestimmt wird, dass es die von anderen Nutzern geposteten Zwischeninformationen gibt, Zielinformationen, die größer als oder gleich zwei durch die Zwischeninformationen getrennte Informationen sind, in einer Zielinformationengruppe zu sammeln.

13. Computerprogramm, das, wenn es auf einem Prozessor einer Vorrichtung ausgeführt wird, ein Verfahren nach einem der Ansprüche 1-9 durchführt.

## Revendications

1. Procédé pour afficher des flux d'informations dans un réseau social à un utilisateur principal, comprenant :
dans des flux d'informations publiés par un utilisateur suivi du réseau social, suivis par l'utilisateur principal, la détermination (101) si des éléments d'informations cibles provenant de cet utilisateur suivi égaux ou supérieurs à un nombre publié défini dans les limites d'une période de temps définie existent ;
s'il est déterminé que les éléments d'informations cibles existent, selon une règle prédéfinie, l'agrégation (102) des éléments d'informations cibles en un groupe d'informations cibles ; et
l'affichage (103) du groupe d'informations cibles, dans lequel l'affichage du groupe d'informations cibles comprend :
la fourniture d'informations d'affichage obtenues à partir du dernier élément d'informations cibles nouvellement publié dans le groupe d'informations cibles, et le repliement ou la dissimulation d'autres éléments d'informations cibles excepté le dernier élément d'informations cibles ;
l'utilisation de l'instant de publication du dernier élément d'informations cibles comme instant de publication du groupe d'informations cibles ; et
l'affichage du groupe d'informations cibles dans l'ordre de l'instant de publication ;
dans lequel pour un instant défini donné, le nombre défini est déterminé par des paramètres incluant le nombre d'utilisateurs suivis, suivis par l'utilisateur principal, et la quantité de temps que l'utilisateur principal passe habituellement sur les réseaux sociaux.

2. Procédé selon la revendication 1, dans lequel, selon une règle prédéfinie, l'agrégation des éléments d'informations cibles dans un groupe d'informations cibles comprend :
la détermination si les éléments d'informations cibles sont publiés par un même utilisateur suivi ;
s'il est déterminé que les éléments d'informations cibles sont publiés par le même utilisateur suivi, la détermination s'il y a des informations intermédiaires publiées par d'autres utilisateurs entre des instants de publication d'éléments respectifs d'informations cibles ; et
sur la base d'un résultat de détermination s'il y a les informations intermédiaires, l'agrégation des éléments d'informations cibles en un groupe d'informations cibles.

3. Procédé selon la revendication 2, dans lequel l'agrégation des éléments d'informations cibles en un groupe d'informations cibles sur la base d'un résultat de détermination s'il y a les informations intermédiaires, comprend :
s'il est déterminé qu'il n'y a aucune information intermédiaire publiée par d'autres utilisateurs, l'agrégation des éléments d'informations cibles en un groupe d'informations cibles ; et
s'il est déterminé qu'il y a les informations intermédiaires publiées par d'autres utilisateurs, l'agrégation des éléments d'informations cibles égaux ou supérieurs à deux éléments séparés par les informations intermédiaires en un groupe d'informations cibles.

4. Procédé selon la revendication 1, dans lequel l'agrégation des éléments d'informations cibles en un groupe d'informations cibles selon une règle prédéfinie, comprend :
la détermination si les éléments d'informations cibles sont publiés par le même utilisateur suivi ;
s'il est déterminé que les éléments d'informations cibles ne sont pas publiés par le même utilisateur suivi, la détermination si les éléments d'informations cibles sont publiés dans un échange de publication/réponse ; et
quand les éléments d'informations cibles sont publiés par au moins deux utilisateurs différents dans un échange de publication/réponse, l'agrégation des éléments d'informations cibles en un groupe d'informations cibles respectivement selon les différents utilisateurs à qui les éléments d'informations cibles appartiennent.

5. Procédé selon la revendication 1, dans lequel l'agrégation des éléments d'informations cibles en un groupe d'informations cibles selon une règle prédéfinie, comprend :
l'extraction d'au moins un mot-clé à partir de chaque élément d'informations cibles ;
sur la base du mot-clé extrait, la détermination d'une catégorie d'attribut de l'élément correspondant d'informations cibles ; et
sur la base de la catégorie d'attribut différente, l'agrégation de deux ou plusieurs éléments d'informations cibles appartenant à la même catégorie d'attribut en un groupe d'informations cibles.

6. Procédé selon la revendication 1, dans lequel l'affichage du groupe d'informations cibles comprend :
l'extraction d'informations clefs à partir du dernier élément d'informations cibles nouvellement publié dans le groupe d'informations cibles ;
l'utilisation des informations clefs dans le dernier élément d'informations cibles en tant qu'informations d'affichage et le repliement ou la dissimulation d'autres éléments d'informations cibles excepté le dernier élément d'informations cibles ;
l'utilisation d'instant de publication du dernier élément d'informations cibles en tant qu'instant de publication du groupe d'informations cibles ; et
l'affichage du groupe d'informations cibles dans l'ordre d'instant de publication.

7. Procédé selon la revendication 6, dans lequel les informations clefs comprennent :
un résumé, ou un mot-clé du dernier élément d'informations cibles, ou une catégorie d'attribut à laquelle le dernier élément d'informations cibles appartient.

8. Procédé selon l'une quelconque des revendications précédentes, dans lequel le procédé comprend en outre :
l'utilisation du nombre des éléments d'informations cibles contenus dans le groupe d'informations cibles en tant qu'informations d'affichage.

9. Procédé selon la revendication 1, dans lequel, après l'affichage du groupe d'informations cibles, le procédé comprend en outre :
l'affichage d'informations non agrégées dans les flux d'informations.

10. Dispositif pour afficher des flux d'informations dans un réseau social à un utilisateur principal, comprenant :
un module de détermination d'informations cibles (310) configuré pour, dans des flux d'informations publiés par un utilisateur suivi du réseau social, suivis par l'utilisateur principal, déterminer si des éléments d'informations cibles provenant de l'utilisateur suivi égaux ou supérieurs à un nombre défini publié dans les limites d'une période de temps définie existent ;
un module d'agrégation (320) configuré pour, s'il est déterminé que les éléments d'informations cibles existent, selon une règle prédéfinie, agréger les éléments d'informations cibles en un groupe d'informations cibles ; et
un module d'affichage (330) configuré pour afficher le groupe d'informations cibles, dans lequel l'affichage du groupe d'informations cibles comprend :
l'utilisation du dernier élément d'informations cibles nouvellement publié dans le groupe d'informations cibles en tant qu'informations d'affichage, et le repliement ou la dissimulation d'autres éléments d'informations cibles excepté le dernier élément d'informations cibles ;
l'utilisation d'instant de publication du dernier élément d'informations cibles en tant qu'instant de publication du groupe d'informations cibles ; et
l'affichage du groupe d'informations cibles dans l'ordre d'instant de publication ;
dans lequel pour un instant donné défini, le nombre défini est déterminé par des paramètres incluant le nombre d'utilisateurs suivis, suivis par l'utilisateur principal, et la quantité de temps que l'utilisateur principal passe habituellement sur les réseaux sociaux.

11. Dispositif selon la revendication 10, dans lequel le module d'agrégation (320) comprend :
un premier sous-module de détermination (321) configuré pour déterminer si les éléments d'informations cibles sont publiés par un même utilisateur suivi ;
un second sous-module de détermination (322) configuré pour, s'il est déterminé que les éléments d'informations cibles sont publiés par le même utilisateur suivi, déterminer s'il y a des informations intermédiaires publiées par d'autres utilisateurs entre des instants de publication d'éléments respectifs d'informations cibles ; et
un sous-module d'agrégation (323) configuré pour, sur la base d'un résultat de détermination s'il y a les informations intermédiaires, agréger les éléments d'informations cibles en un groupe d'informations cibles.

12. Dispositif selon la revendication 11, dans lequel le sous-module d'agrégation (323) comprend :
un premier sous-module d'agrégation (3231) configuré pour, s'il est déterminé qu'il n'y a aucune information intermédiaire publiée par d'autres utilisateurs, agréger les éléments d'informations cibles en un groupe d'informations cibles ; et
un second sous-module d'agrégation (3232) configuré pour, s'il est déterminé qu'il y a les informations intermédiaires publiées par d'autres utilisateurs, agréger des éléments d'informations cibles égaux ou supérieurs à deux éléments séparés par les informations intermédiaires en un groupe d'informations cibles.

13. Programme informatique, qui en s'exécutant sur un processeur d'un dispositif, effectue un procédé selon l'une quelconque des revendications 1 à 9.
